(19) **Europäisches Patentamt / European Patent Office / Office européen des brevets**

(11) **EP 4 030 746 B1**

(12) **EUROPEAN PATENT SPECIFICATION**

(45) Date of publication and mention
of the grant of the patent:
**07.05.2025 Bulletin 2025/19**

(21) Application number: **20862427.0**

(22) Date of filing: **14.08.2020**

(51) International Patent Classification (IPC):
*H04N 13/239* (2018.01)   *H04N 13/296* (2018.01)
*G01C 3/10* (2006.01)   *H04N 23/45* (2023.01)

(52) Cooperative Patent Classification (CPC):
**G01C 3/10; H04N 13/239; H04N 13/296;**
**H04N 23/45;** G03B 35/08; H04N 13/133;
H04N 13/246; H04N 25/531

(86) International application number:
**PCT/JP2020/030857**

(87) International publication number:
**WO 2021/049250 (18.03.2021 Gazette 2021/11)**

(54) **IMAGE PROCESSING DEVICE AND STEREO CAMERA DEVICE USING SAME**

BILDVERARBEITUNGSVORRICHTUNG UND STEREOKAMERAVORRICHTUNG DAMIT

DISPOSITIF DE TRAITEMENT D'IMAGE ET DISPOSITIF DE CAMÉRA STÉRÉO UTILISANT
CELUI-CI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.09.2019 JP 2019167079**

(43) Date of publication of application:
**20.07.2022 Bulletin 2022/29**

(73) Proprietor: **Hitachi Astemo, Ltd.
Ibaraki 312-8503 (JP)**

(72) Inventors:
• **MATSUO, Shigeru
Tokyo 100-8280 (JP)**

• **KIDO, Hideaki
Tokyo 100-8280 (JP)**
• **NONAKA, Shinichi
Hitachinaka-shi,
Ibaraki 312-8503 (JP)**
• **TAKADA, Masashi
Hitachinaka-shi,
Ibaraki 312-8503 (JP)**

(74) Representative: **Mewburn Ellis LLP
Aurora Building
Counterslip
Bristol BS1 6BX (GB)**

(56) References cited:
**WO-A1-2017/134915   WO-A1-2019/146510
US-A1- 2012 236 124**

**Description**

Technical Field

The present invention relates to an image processing device that processes images captured by a plurality of rolling shutter-type image sensors (cameras), and an in-vehicle stereo camera device that recognizes an obstacle outside a vehicle using the image processing device and a plurality of cameras.

Background Art

In order to improve traveling safety of a vehicle, a system has been studied in which an obstacle ahead is detected by a camera mounted on the vehicle, and when there is a possibility of collision with the obstacle, an alarm to a driver or automatic braking is performed.

As a sensor for monitoring the front of the vehicle, there are a millimeter wave radar, a laser radar, a camera, and the like. As a type of camera, there are a monocular camera and a stereo camera using a plurality of cameras. The stereo camera can measure a distance to a photographed object by using parallax of an overlapping region of images photographed by two cameras at a predetermined interval (for example, see JP 2018-105682 A). Therefore, it is possible to accurately grasp the risk of collision to the object ahead. The stereo camera obtains parallax between images captured by the two cameras and transforms the parallax into a distance.

As an exposure type of an image sensor for photographing an image, there is a rolling shutter type. The rolling shutter type is a type of photographing pixels of sensors disposed two-dimensionally while shifting exposure timings in units of rasters. In this type, it is known that distortion occurs in an image when a fast moving subject is captured. For this reason, when the traveling direction is captured by the stereo camera mounted on the moving vehicle, there may be a difference in the measured distance between the upper side and the lower side of the image. JP 2019-62255 A proposes a method of correcting a distance difference between the upper and lower sides of the image.

US 2012/236124 A1 discloses a stereo camera apparatus for obtaining distance information of an object. The stereo camera apparatus includes a camera unit that includes a left image sensor and a right image sensor respectively obtaining a left-side image and a right-side image.

Summary of Invention

Technical Problem

JP 2019-62255 A proposes a method of adjusting all the parallaxes in an image to the parallax of a reference time by correcting the parallax based on the reference time by a delay amount of the exposure timing for each pixel from the reference time. However, the influence of the rolling shutter type on the parallax of the stereo camera has the following problems in addition to the above problems.

That is, an image captured using the optical lens is distorted. Therefore, in the stereo camera, it is necessary to correct the distortion of the left and right cameras so that the same object appears at the same raster position in the left and right images (images captured by the left and right cameras). This is because the parallax is calculated in the stereo matching processing while scanning the block matching in the raster direction. Meanwhile, since the distortion of the right and left lenses is not the same, the exposure timings of pixels of the same raster of the left and right images after correcting the lens distortion may be different between the left and right images. In this case, if the vehicle moves during the period of the deviation in the exposure timing, the same object may not appear in the same raster of the left and right images. In this case, there is a possibility that an erroneous calculation occurs in the stereo matching processing and an error occurs in the parallax. JP 2019-62255 A does not disclose such a problem.

An object of the present invention is to provide an image processing device capable of reducing an error in parallax calculation of stereo matching processing, and a stereo camera device using the image processing device.

Solution to Problem

The invention is defined in the independent claims. The dependent claims describe optional embodiments of the invention. An image processing device includes a geometric correction unit configured to correct distortion of images captured by a plurality of rolling shutter-type image sensors mounted in a vehicle, a parallax calculation unit configured to calculate a parallax using a corrected image that is corrected by the geometric correction unit, and an exposure time difference adjusting unit configured to adjust a geometric correction position of at least one image based on a difference between a geometric correction amount used for distortion correction of an image serving as a reference and a geometric correction amount used for distortion correction of other images and vehicle information regarding a position or movement of the vehicle.

Advantageous Effects of Invention

According to the present invention, for example, in a stereo camera device, pixels on the same raster of the respective images (left and right images) become images with the same exposure timing, and thus, there is an effect that an error in parallax calculation of the stereo matching processing can be reduced.

Objects, configurations, and effects besides the above description will be apparent through the explanation on the following embodiments.

Brief Description of Drawings

[FIG. 1] FIG. 1 is a system configuration diagram of a stereo camera device on which an image processing device according to a first embodiment is mounted.
[FIG. 2] FIG. 2 is a diagram illustrating images before and after geometric correction of lens distortion of a camera image.
[FIG. 3] FIG. 3 is a diagram illustrating an example in which a subject is shifted and photographed at the same y coordinate of left and right images.
[FIG. 4] FIG. 4 is a diagram illustrating an example of geometric correction processing using a geometric correction table.
[FIG. 5] FIG. 5 is a diagram illustrating correspondence between a two-dimensional image indicated by x and y coordinates and a three-dimensional space indicated by X, Y, and Z.
[FIG. 6] FIG. 6 is a diagram illustrating an example of an image obtained by photographing a road surface during traveling.
[FIG. 7] FIG. 7 is an operation flowchart of a stereo camera device.
[FIG. 8] FIG. 8 is a processing flowchart of an exposure time difference adjusting unit.
[FIG. 9] FIG. 9 is a system configuration diagram of the stereo camera device on which an image processing device including the exposure time difference adjusting unit having an exposure difference table according to a second embodiment is mounted.
[FIG. 10] FIG. 10 is a system configuration diagram of a stereo camera device on which an image processing device provided with a dynamic geometric correction unit according to a third embodiment is mounted.
[FIG. 11] FIG. 11 is a diagram illustrating an example of correcting an image of a road sign as an object other than an object on a road surface in a fourth embodiment.
[FIG. 12] FIG. 12 is a processing flowchart of a parallax calculation unit that obtains a distance of an object by using parallax data in the fourth embodiment. Description of Embodiments

Hereinafter, embodiments of the present invention will be described using the drawings and the like. Although the following description illustrates specific examples of the content of the invention, the invention is not limited to the described embodiments but is defined by the appended claims. In all the drawings for describing the invention, components having the same function are designated by the same reference numeral, and the repeated description thereof may be omitted.

[First Embodiment]

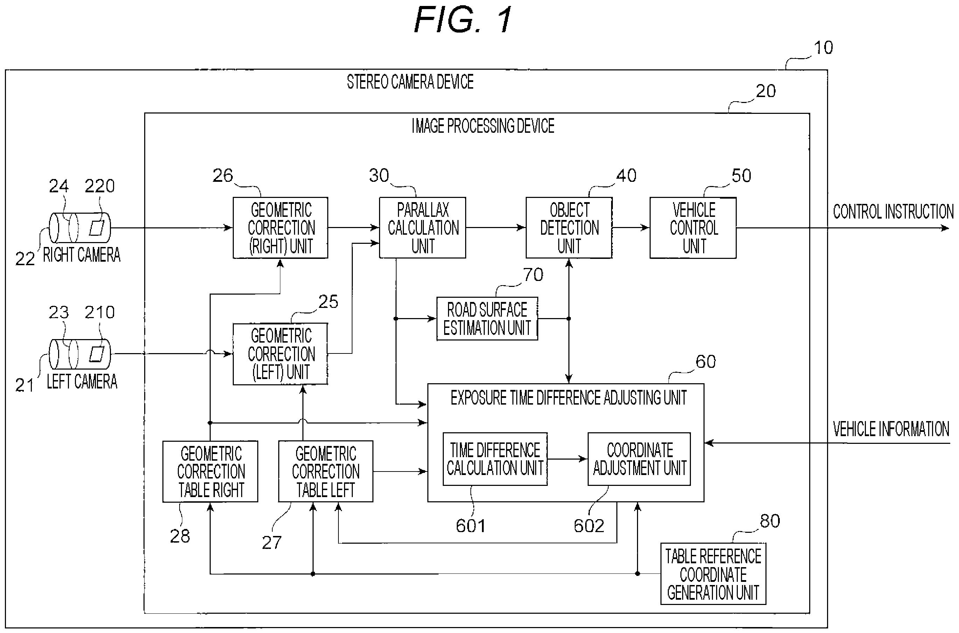

FIG. 1 illustrates a system configuration diagram of a stereo camera device 10 on which an image processing device 20 according to a first embodiment is mounted. The stereo camera device 10 is mounted on a vehicle (hereinafter, it may be referred to as an own vehicle) not illustrated, and mainly includes a pair of left and right cameras (a left camera 21 and a right camera 22) arranged at predetermined intervals (side by side) so as to photograph the periphery (for example, the front) of the vehicle, and the image processing device 20 that processes images (hereinafter, the image may be referred to as a camera image) of the cameras.

In this example, two cameras of the right camera 22 and the left camera 21 capture images around the vehicle. An optical lens 24 and an image sensor 220 are mounted in the right camera 22, and an optical lens 23 and an image sensor 210 are mounted in the left camera 21. The image sensors 220 and 210 are a rolling shutter type. An angle of view and a focal distance of the image captured by the camera are determined by an optical lens. An image captured through the optical lens is distorted. The geometric correction is performed to correct the distortion.

The images (images with distortion) captured by the right camera 22 and the left camera 21 are input to the image processing device 20. The image processing device 20 includes a microcomputer including a CPU (Central Processing Unit), a memory, and the like, and the CPU executes various processes described below according to instructions of a program stored in the memory.

In the present embodiment, the image processing device 20 includes a geometric correction (left) unit 25, a geometric correction (right) unit 26, a geometric correction table left 27, a geometric correction table right 28, a parallax calculation unit 30, an object detection unit 40, a vehicle control unit 50, an exposure time difference adjusting unit 60, a road surface estimation unit 70, and a table reference coordinate generation unit 80, which are communicably connected via a communication line.

The geometric correction (right) unit 26 corrects the image of the right camera 22 (which may be referred to as a right image or a right camera image), and the geometric correction (left) unit 25 corrects the image of the left camera 21 (which may be referred to as a left image or a left camera image). In the present example, the geometric correction processing of the image is performed using the geometric correction table. The geometric correction table right 28 is a table for correcting the photographed image of the right camera 22, and is input to the geometric correction (right) unit 26. The geometric correction table left 27 is a table for correcting the photographed image of the left camera 21, and is input to the geometric correction (left) unit 25. The images (corrected images) corrected by the geometric correction (right) unit 26 and the geometric correction (left) unit 25 are input to the parallax calculation unit 30.

Note that, here, a table method using a geometric correction table is adopted as the geometric correction processing of the image, but for example, a geometric correction value used for the geometric correction processing (distortion correction processing) may be calculated and obtained using a mathematical expression or the like.

The exposure time difference adjusting unit 60 is a unit that corrects a deviation between the left and right images caused by a deviation in the exposure time (exposure timing) between the image captured by the right camera 22 and the image captured by the left camera 21. The deviation between the left and right images is caused by a deviation in the exposure time in a part of both images when the left and right images are geometrically corrected. The exposure time difference adjusting unit 60 includes a time difference calculation unit 601 that calculates an exposure time difference by using a difference in correction amount between the geometric correction table right 28 and the geometric correction table left 27, and a coordinate adjustment unit 602 that corrects an image by using the exposure time difference and a vehicle signal (vehicle information) such as a vehicle speed and a steering angle (details will be described later).

The table reference coordinate generation unit 80 sequentially generates coordinates (x, y) to refer to the geometric correction table (the geometric correction table right 28 and the geometric correction table left 27) in order to perform geometric correction on the entire image from the upper left to the lower right.

The parallax calculation unit 30 uses the image corrected by the geometric correction (right) unit 26 as a reference image, and performs stereo matching processing in order to calculate parallax data with the image corrected by the geometric correction (left) unit 25. The parallax data is generated for each pixel of the entire image. The parallax data generated by the parallax calculation unit 30 is input to the road surface estimation unit 70 and the object detection unit 40.

The road surface estimation unit 70 extracts a portion of the road surface on which the own vehicle is traveling in the parallax data from the image, and calculates a parameter of the road surface. The parameter of the road surface calculated by road surface estimation unit 70 is input to the object detection unit 40.

Based on the parallax data from the parallax calculation unit 30 and the parameter of the road surface from the road surface estimation unit 70, the object detection unit 40 detects a three-dimensional object on the road surface using the parallax data and the image data. The information detected by the object detection unit 40 is input to the vehicle control unit 50.

When the three-dimensional object detected by the object detection unit 40 becomes an obstacle to traveling, the vehicle control unit 50 generates and outputs a control instruction for controlling a brake, a suspension, and the like provided in the vehicle in order to avoid a collision with the obstacle or reduce an impact due to the collision.

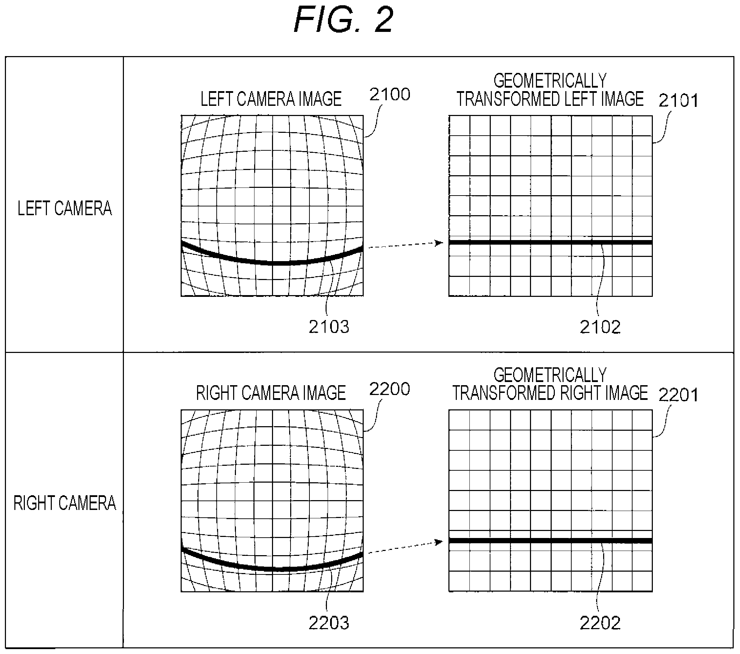

FIG. 2 is a diagram illustrating images before and after geometric correction of lens distortion of a camera image. When a square lattice pattern is photographed, a right camera image 2200 becomes an image distorted by the optical lens 24. When this image is corrected by the geometric correction (right) unit 26, a geometrically transformed right image 2201 is obtained. A curve 2203 in the right camera image 2200 is a straight line 2202 in the geometrically transformed right image 2201. Similarly, when a square lattice pattern is photographed, a left camera image 2100 becomes an image distorted by the optical lens 23. When this image is corrected by the geometric correction (left) unit 25, a geometrically transformed left image 2101 is obtained. A curve 2103 in the left camera image 2100 is a straight line 2102 in the geometrically transformed left image 2101.

Normally, since the distortion characteristics of the right optical lens 24 and the left optical lens 23 are different, for example, even if the straight line 2202 and the straight line 2102 have the same y coordinate, the y coordinate of the curve 2203 and the y coordinate of the curve 2103 before transformation of these straight lines may be different. Since the image sensors 220 and 210 as optical sensors (such as a CCD sensor or a CMOS sensor) of the right camera 22 and the left camera 21 are the rolling shutter type, the exposure time of the curve 2203 and the exposure time of the curve 2103 are shifted from each other. This is because the exposure time of the rolling shutter is shifted in units of rasters. When the vehicle is moving, the subject is photographed while shifted to the same y coordinate in the left and right images (the geometrically transformed right image 2201 and the geometrically transformed left image 2101) after the geometric correction.

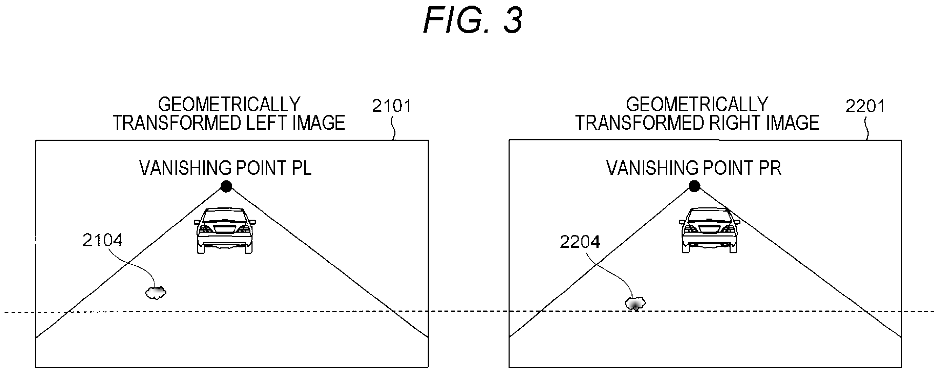

FIG. 3 is a diagram illustrating an example in which a subject is shifted and photographed at the same y coordinate of left and right images. The object 2104 on the road surface of the geometrically transformed left image 2101 and the object 2204 on the road surface of the geometrically transformed right image 2201 are the same object but have a shift in the y coordinate on the image. Since the stereo matching processing is based on the premise that the same subject is photographed at the same y coordinate on the left and right when the parallax between the left and right images is calculated, an error occurs in the stereo matching in this case. The reason why the y coordinates of the object 2104 and the object 2204 are shifted as illustrated in FIG. 3 is that the exposure time is shifted although the y coordinates of the straight line 2102 and the straight line 2202 illustrated in FIG. 2 are the same. Therefore, it is necessary to correct the geometric transformation so that the data of the same coordinates on the left and right of the geometrically transformed image becomes pixel data with the same exposure timing.

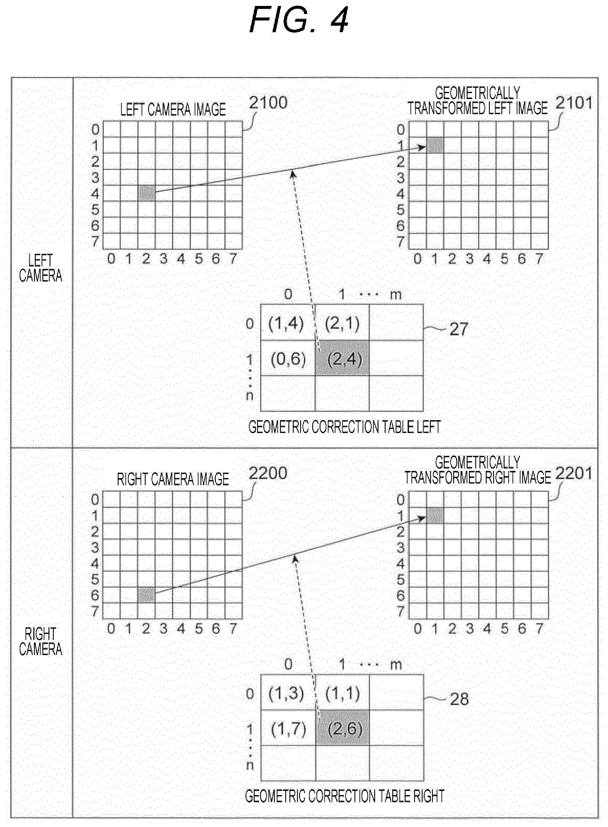

FIG. 4 is a diagram illustrating an example of geometric correction processing using a geometric correction table. In FIG. 4, the left camera image 2100 has 64 pixels of 8 pixels in the x direction and 8 pixels in the y direction, and the geometrically transformed left image 2101 has 64 pixels of 8 pixels in the x direction and 8 pixels in the y direction. The geometric correction table left 27 indicates which pixel of the left camera image 2100 (before the geometric transformation) is used for each pixel of the geometrically transformed left image 2101. This example indicates that the pixel data of x = 2 and y = 4 of the left camera image 2100 (before the geometric transformation) is used for the coordinates of x = 1 and y = 1 of the geometrically transformed left image 2101. Similarly, for the right camera image 2200, pixel data of x = 2 and y = 6 of the right camera image 2200 (before the geometric transformation) is used for the coordinates of x = 1 and y = 1 of the geometrically transformed right image 2201, as indicated by the geometric correction table right 28. According to this example, in the pixel data of x = 1 and y = 1 of the left and right geometrically transformed images, the right camera image 2200 has y = 6 and the left camera image 2100 has y = 4, and there is a difference of two rasters. If the difference between the two rasters of the image sensors 220 and 210 is multiplied by the time difference of the exposure timing per raster, the deviation amount (difference) of the exposure timing of the pixel is obtained. That is, by comparing the correction data (correction amount) indicated at the same coordinate position in the left and right geometric correction tables, the deviation amount (exposure time difference) of the exposure timing between the same coordinates of the left and right geometrically corrected images can be known.

The moving distance and the moving direction of the vehicle are calculated based on the deviation amount, and the positional deviation of one of the left and right images is corrected. In this embodiment, the right image is used as the reference image for the stereo processing, and the left image is corrected. In the present embodiment, the numerical value of the geometric correction table is expressed in an integer format, but it is also possible to express the numerical value in a small number format for improving accuracy. In addition, the geometric correction table may be thinned out to about 8 pixel units, and the pixels therebetween may be interpolated to reduce the table size.

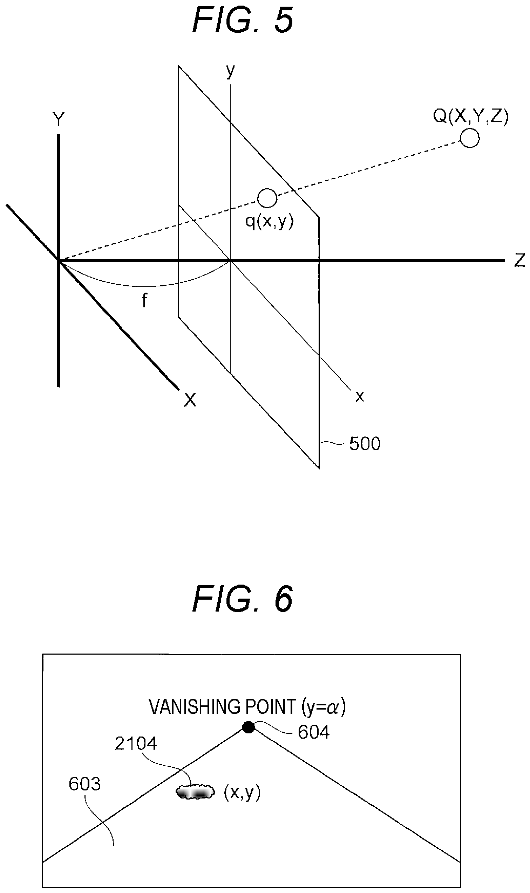

The correction of the positional deviation of the image described above will be described. FIG. 5 is a diagram illustrating correspondence between a two-dimensional image 500 indicated by x and y coordinates and a three-dimensional space indicated by X, Y, and Z. When the point Q in the three-dimensional space is displayed at the point q of the two-dimensional image 500, the following Expressions (1) and (2) are obtained. In Expressions (1) and (2), f represents a focal distance. If (x, y) on the image and Z of the pixel are known, X and Y are determined by converting Expressions (1) and (2).

(Math. 1)

$$x = f(X/Z) \qquad (1)$$

(Math. 2)

$$y = f(Y/Z) \qquad (2)$$

FIG. 6 is a diagram illustrating an example of an image obtained by photographing a road surface 603 during traveling. Assuming that the road surface 603 is a flat surface and has no inclination in the lateral direction, the relationship between the y coordinate and the Z value on the road surface 603 is represented by the following Expression (3). In Expression (3), $\alpha$ is a y coordinate of a vanishing point 604, and $\beta$ is a parameter of the road surface obtained by a ground height, a focal distance, or the like of the camera.

(Math. 3)

$$y = \alpha - \beta/Z \qquad (3)$$

When Expression (3) is converted into an expression for obtaining a Z value to calculate a Z value from the y coordinate on the road surface 603, and x and y on the road surface 603 and the Z value are applied to the expressions obtained by converting Expressions (1) and (2) to obtain X and Y, the coordinates (X, Y, Z) of a three-dimensional space corresponding to a point (x, y) of the object 2104 on the road surface 603 can be calculated. When the moving distance and the moving direction of the vehicle obtained from the difference between the y coordinate values of the left and right geometric correction table illustrated in FIG. 4 are added to the (X, Y, Z) and the (x, y) of the left camera image is obtained again by Expressions (1) and (2), it is possible to obtain an image in which the deviation between the exposure times of the geometrically transformed right image 2201 and the geometrically transformed left image 2101 is corrected.

As described above, the time difference calculation unit 601 of the exposure time difference adjusting unit 60 illustrated in FIG. 1 compares the correction data (correction amount) indicated at the same coordinate position in the left and right geometric correction tables (the geometric correction table right 28 and the geometric correction table left 27) to obtain the difference, and multiplies (in consideration of) the time difference of the exposure timing per raster to obtain the deviation amount (exposure time difference) of the exposure timing between the same coordinates of the left and right geometrically corrected images.

In addition, as described above, the coordinate adjustment unit 602 of the exposure time difference adjusting unit 60 corrects the positional deviation of the image, in other words, adjusts the geometric correction position of the left image, using the deviation amount (exposure time difference) of the exposure timing and the vehicle information regarding the position or movement of the vehicle. The vehicle information includes a turning angle, an own vehicle speed, and the like, and is obtained from, for example, a steering angle, a yaw rate, and a speed sensor mounted on the vehicle. In addition, as the vehicle information, a turning angle, an own vehicle speed, and the like may be calculated from an own vehicle position. As a result, it is possible to calculate the moving distance and the moving direction of the vehicle that has moved in the deviation period of the exposure timing.

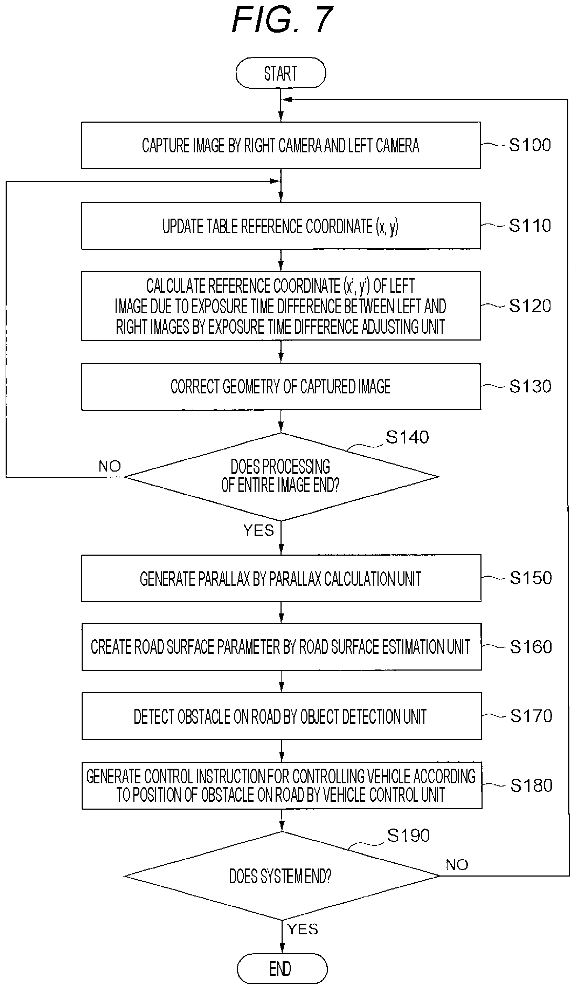

FIG. 7 illustrates an operation flow of the stereo camera device 10.

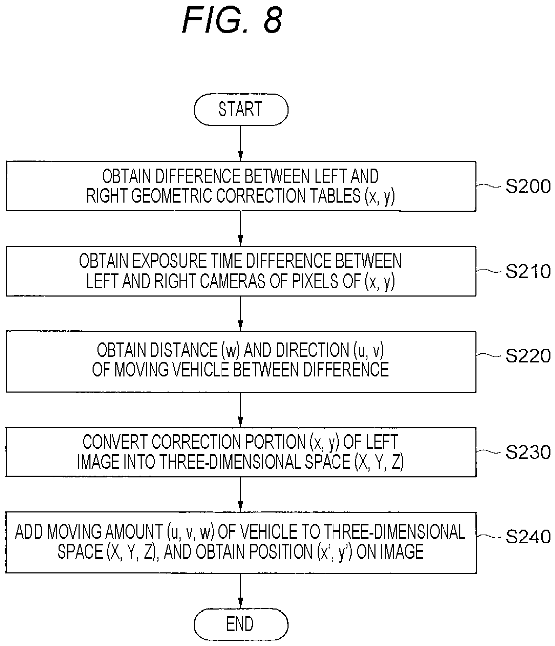

First, images are captured by the right camera 22 and the left camera 21 (S100). Next, the geometric transformation processing is performed to correct lens distortion of the image. For this purpose, the table reference coordinate generation unit 80 updates the coordinates (x, y) to which the geometric correction table is referred (S110). The exposure time difference adjusting unit 60 calculates reference coordinates (x', y') of the left image based on the exposure time difference between the left and right images (S120). Details of this portion will be described later based on FIG. 8. Next, the geometric correction table right 28 for correction of the right image is accessed with coordinates (x, y), and the geometric correction table left 27 for correction of the left image is accessed with coordinates (x', y'). Using the results of accessing the respective geometric correction tables, the geometric correction (right) unit 26 and the geometric correction (left) unit 25 perform image correction processing as illustrated in FIG. 4 (S130). This correction processing is performed on the entire image (S140).

Next, using the geometrically corrected left and right images, the parallax calculation unit 30 generates parallax data (S150). The road surface estimation unit 70 creates a road surface parameter ($\alpha$, $\beta$) using the parallax data (S160). Using the parallax data, the object detection unit 40 detects an object on the road surface, calculates a position, a distance, and a size of the object, and detects the road obstacle (S170). Then, the vehicle control unit 50 generates a control instruction for controlling the brake, the suspension, and the like according to the position of the road obstacle so as not to cause an obstacle in traveling of the own vehicle (S180), and then determines the ending of the system (S190).

FIG. 8 illustrates a processing flow of the exposure time difference adjusting unit 60 (the processing flow of S120 in FIG. 7 described above). The left and right geometric correction tables are accessed in accordance with (x, y), and a difference s in the number of rasters is obtained from the difference between the correction coordinate values recorded in the left and right geometric correction tables as illustrated in FIG. 4 (S200). This s is indicated by a table indicating the deviation in exposure time (a difference in exposure timing for each pixel) with a time ratio in units of rasters. The exposure time difference r between the left and right cameras of the pixel of (x, y) is obtained (by the time difference calculation unit 601) from the difference s (S210). When the exposure time difference per raster of the image sensor is $\delta$, the exposure time difference r is expressed by the following Expression (4).
(Math. 4)

$$r = \delta \cdot s \qquad (4)$$

Subsequently, a distance w and a direction (u, v) in which the vehicle has moved during the period of the exposure time difference r are obtained based on vehicle information such as an own vehicle speed and a turning angle (S220). Next, the coordinates of the correction portion (x, y) of the left image are converted into (X, Y, Z) in a three-dimensional space using Expressions (1), (2), and (3) (S230). The (u, v, w) is added to the (X, Y, Z) and applied to Expressions (1) and (2) to obtain the position (x', y') on the image as follows (by the coordinate adjustment unit 602) (S240).
(Math. 5)

$$x' = f(X + u)/(Z + w) \qquad (5)$$

(Math. 6)

$$y' = f(Y + v)/(Z + w) \qquad (6)$$

The processing of S130 of FIG. 7 is performed using this (x', y') as described above.

As described above, the image processing device 20 of the first embodiment includes the geometric correction unit (the geometric correction (right) unit 26, the geometric correction (left) unit 25) that corrects the distortion of the images captured by the plurality of rolling shutter-type image sensors 220 and 210, the parallax calculation unit 30 that calculates the parallax using the corrected image corrected by the geometric correction unit, and the exposure time difference adjusting unit 60 that adjusts the geometric correction position of at least one image (left image) based on the difference between the geometric correction amount (geometric correction table right 28) used for distortion correction of the image (right image) as a reference captured by the pixel sensor 220 and the geometric correction amount (geometric correction table left 27) used for distortion correction of the other image (left image) captured by the pixel sensor 210 and the vehicle information (own vehicle speed, turning angle, etc.) regarding the position or movement of the vehicle.

In addition, a geometric correction table (the geometric correction table right 28 and the geometric correction table left 27) as a geometric correction amount is included, and the exposure time difference adjusting unit 60 obtains a difference in exposure timing for each pixel between the images from a difference in the correction amounts of the geometric correction table right 28 of the image (right image) serving as a reference and the geometric correction table left 27 of the other image (left image), and adjusts the geometric correction position of at least one image (left image) based on the difference in exposure timing for each pixel and the vehicle information.

As described above, in the first embodiment, the function of adjusting the deviation of the exposure timings of the left and right images is realized by adjusting the reference position (geometric correction position) of the geometric correction table used for the geometric correction processing of correcting the lens distortion of the left and right images. Specifically, in the stereo camera device 10, a difference between the exposure timings of pixels at the same position is calculated for the left and right images after correcting the geometric distortion of the lens, the image is corrected in accordance with the distance and direction in which the vehicle has moved based on the difference, and the exposure timings of the pixels of the left and right images are matched.

As a result, according to the first embodiment, for example, in the stereo camera device 10, pixels on the same raster of the respective images (left and right images) become images with the same exposure timing, and thus, there is an effect that an error in parallax calculation of the stereo matching processing can be reduced. In addition, it is not necessary to exclusively provide the image conversion processing for adjusting the deviation of the exposure timing, and as a result, it is possible to reduce the amount of hardware and the calculation load.

[Second Embodiment]

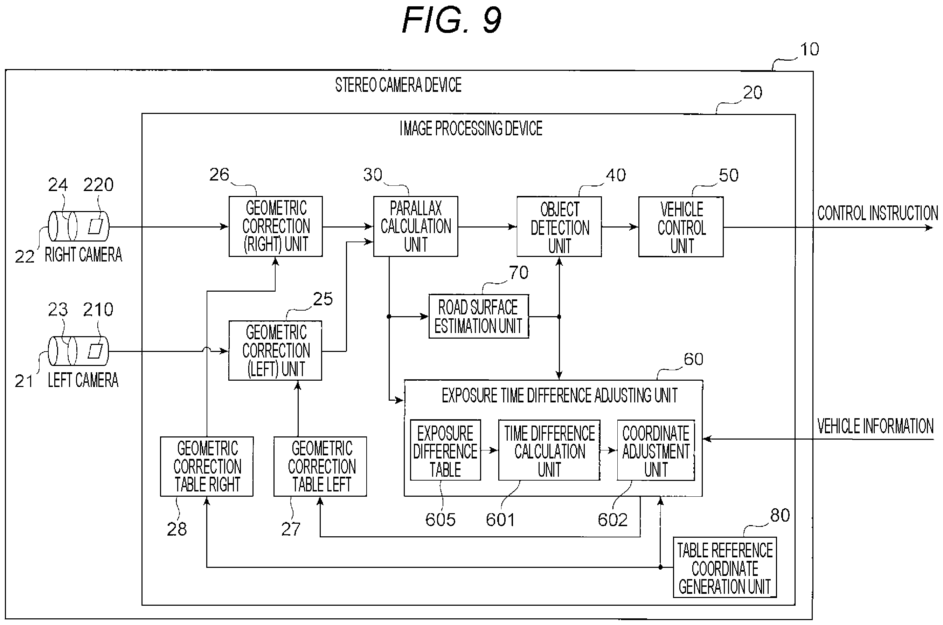

FIG. 9 is a system configuration diagram of the stereo camera device 10 on which the image processing device 20 including the exposure time difference adjusting unit 60 that previously holds a time difference between exposure timings of pixels of left and right images as a table (exposure left table 605) in the second embodiment is mounted. The difference from FIG. 1 is that the exposure time difference adjusting unit 60 holds in advance a raster difference (for each pixel) of the same coordinate portion of the geometric correction table right 28 and the geometric correction table left 27 as the exposure difference table 605. The raster difference corresponds to s in Expression (4) described above.

The exposure time difference adjusting unit 60 of the image processing device 20 extracts the value of the exposure difference table 605 corresponding to the pixel to be adjusted (corresponding to the deviation amount of the exposure timing between the same coordinates of the left and right geometrically corrected images), and corrects the positional deviation of the image using the extracted value and the vehicle information regarding the position or movement of the vehicle, in other words, adjusts the geometric correction position of the left image.

As described above, the image processing device 20 of the second embodiment includes the exposure difference table 605 indicating the difference in the exposure timing for each pixel between the images captured by the respective image sensors 220 and 210, and the exposure time difference adjusting unit 60 extracts the value of the exposure difference table 605 corresponding to the pixel to be adjusted, and adjusts the geometric correction position of at least one image (left image) based on the extracted value and the vehicle information.

As described above, in the first embodiment illustrated in FIG. 1, s is calculated in each frame from the geometric correction table right 28 and the geometric correction table left 27, but in the second embodiment illustrated in FIG. 9, the calculation of s can be omitted by the exposure difference table 605 to reduce the amount of calculation.

As a result, according to the second embodiment, it is possible to reduce the calculation load (of the exposure time difference adjusting unit 60) in the image processing device 20 in addition to obtaining the same operation and effect as those of the first embodiment described above.

[Third Embodiment]

In the stereo camera device, in addition to the image deviation due to the distortion of the optical lens, the optical axis deviation of the left and right camera images may occur due to secular change or temperature change. Since a parameter of the distortion of the optical lens is determined when the lens is processed, the correction (distortion correction) is static geometric correction. On the other hand, in the correction of the optical axis deviation (amount) accompanying secular change or temperature change, a parameter is determined when the stereo camera device is used, and thus, the correction is dynamic geometric correction.

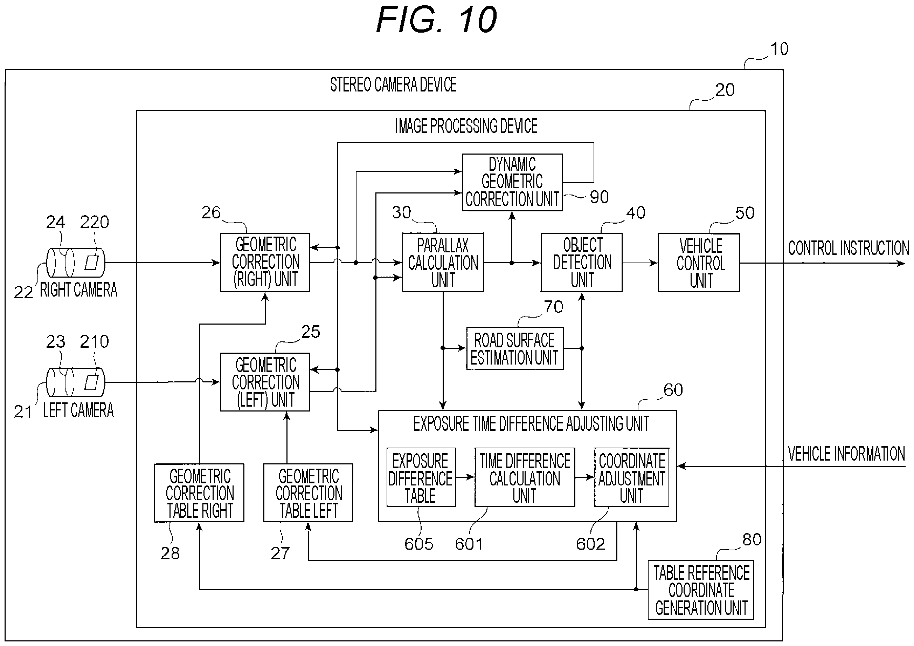

FIG. 10 is a system configuration diagram of the stereo camera device 10 on which the image processing device 20 provided with a dynamic geometric correction unit 90 according to a third embodiment is mounted. It is assumed that the dynamic geometric correction unit 90 detects the amount of optical axis deviation of an image during operation due to secular change or temperature change by a method as disclosed in JP 2018-105682 A, for example, and calculates the amount of longitudinal deviation (also referred to as vertical deviation) of the image. The amount of longitudinal deviation is sent to the geometric correction (left) unit 25, and processing of deviating the image captured by the left camera 21 in the longitudinal direction by an amount indicated by the amount of longitudinal deviation is performed. Alternatively, the amount of longitudinal deviation is sent to the geometric correction (right) unit 26, and processing of deviating the image captured by the right camera 22 in the longitudinal direction by an amount indicated by the amount of longitudinal deviation is performed. In addition, the exposure time difference adjusting unit 60 adds (or subtracts) the amount of longitudinal deviation to the value of the exposure difference table 605 and calculates a final deviation amount of raster. Using this result, the exposure time difference adjusting unit 60 calculates the reference coordinates of the geometric correction table left 27 in the same manner as in the first and second embodiments described above.

As described above, the image processing device 20 of the third embodiment includes the dynamic geometric correction unit 90 that detects the amount of optical axis deviation of the image in operation, and the exposure time difference adjusting unit 60 adjusts the geometric correction position of at least one image (left image) using the deviation (difference) of the exposure timing of the image and (the amount of longitudinal deviation of the image corresponding to) the amount of optical axis deviation detected by the dynamic geometric correction unit 90.

As described above, in the third embodiment, even when the stereo camera device 10 has a deviation in the left and right camera images due to secular change or temperature change, the deviation of the exposure timing is corrected in consideration of the deviation, and the image is corrected based on the correction.

As a result, according to the third embodiment, it is possible to calculate more correct parallax data in addition to obtaining the same operational effects as those of the first and second embodiments described above.

[Fourth Embodiment]

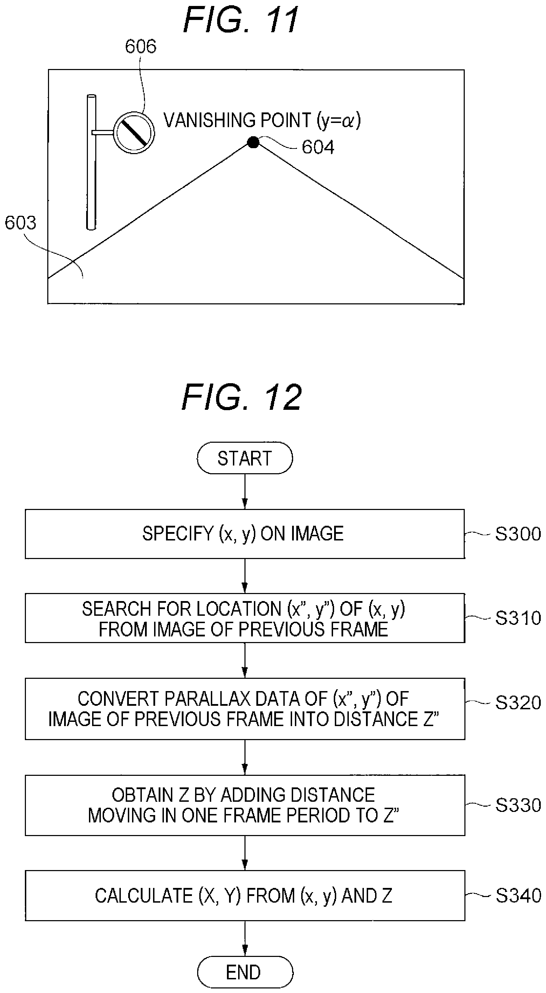

FIG. 11 is a diagram illustrating an example of correcting the image of a road sign 606 as an object other than an object on the road surface. In order to correct the image of the object, a distance Z is required in addition to the (x, y) on the image. The distance Z of the object at the road surface height can be obtained by the above Expression (3). However, the distance Z cannot be obtained for an object other than the road surface height by this method. Therefore, in the fourth embodiment, a method using parallax data will be described.

FIG. 12 is a processing flowchart of the parallax calculation unit 30 that obtains the distance Z of an object by using parallax data.

First, the coordinates (x, y) of a portion to be corrected in the image are specified (S300). Thereafter, the location (x", y") of the (x, y) is searched for from the image one frame before (S310). Parallax data d of the coordinates of (x", y") is converted into a distance Z" by the following Expression (7) (S320). In Expression (7), f is a focal distance, B is a distance between the left and right cameras, and a is a size of one pixel of the image sensor. (Math. 7)

$$Z'' = (f \times B)/(d \times a) \qquad (7)$$

Next, the distance Z is obtained by adding a distance traveled by the own vehicle in one frame period to the distance Z" (S330). From the (x, y) and the Z, (X, Y) can be calculated by modifying Expressions (1) and (2) (S340). Then, in order to obtain an image in which the exposure timings are matched on the left and right sides, correction coordinates of the image can be calculated by Expressions (5) and (6).

As described above, according to the method of the fourth embodiment, it is possible to also correct an object other than the object on the road surface to an image in which the exposure timings of the left and right images are matched.

As a result, according to the fourth embodiment, it is possible to calculate correct parallax data in a wider range in addition to obtaining the same operational effects as those of the first to third embodiments described above.

Note that, in the above-described embodiment, the stereo camera device 10 includes two (left and right) cameras, but the number of cameras constituting the stereo camera device 10 may be three or more.

In addition, in the above-described embodiment, the camera (the left camera 21 and the right camera 22) including the image sensor constituting the stereo camera device 10 and the image processing device 20 are configured as separate bodies. However, the camera and a part (for example, the geometric correction (left) unit 25, the geometric correction (right) unit 26, the exposure time difference adjusting unit 60, and the like) or the whole of the image processing device 20 may be integrated, in other words, a part (for example, the geometric correction (left) unit 25, the geometric correction (right) unit 26, the exposure time difference adjusting unit 60, and the like) or the whole of the image processing device 20 may be incorporated in the camera.

Each of the above configurations, functions, processing units, processing means, and the like may be partially or entirely achieved by hardware by, for example, designing by an integrated circuit. Each of the above configurations, functions, and the like may be achieved by software by a processor interpreting and executing a program that achieves each function. Information such as a program, a table, and a file for achieving each function can be stored in a memory device such as a memory, a hard disk, or a solid-state drive (SSD), or a recording medium such as an integrated circuit (IC) card, a secure digital (SD) card, or a digital versatile disc (DVD).

In addition, only control lines and information lines considered to be necessary for explanation are illustrated, but not all the control lines and the information lines for a product are illustrated.

Reference Signs List

| | |
|---|---|
| 10 | stereo camera device |
| 20 | image processing device |
| 21 | left camera |
| 22 | right camera |
| 23 | optical lens (left) |
| 24 | optical lens (right) |
| 25 | geometric correction (left) unit |
| 26 | geometric correction (right) unit |
| 27 | geometric correction table right |
| 28 | geometric correction table left |
| 30 | parallax calculation unit |
| 40 | object detection unit |
| 50 | vehicle control unit |
| 60 | exposure time difference adjusting unit |
| 70 | road surface estimation unit |
| 80 | table reference coordinate generation unit |
| 90 | dynamic geometric correction unit |
| 210 | image sensor (left) |
| 220 | image sensor (right) |
| 601 | time difference calculation unit |
| 602 | coordinate adjustment unit |
| 603 | road surface |
| 604 | vanishing point |
| 605 | exposure difference table |
| 606 | road sign |

**Claims**

1. An image processing device comprising:

   a geometric correction unit (25, 26) configured to correct distortion of a first image and a second image captured by a first rolling shutter-type image sensor (220) and a second rolling shutter-type image sensor (210), respectively, mounted in a vehicle; and
   a parallax calculation unit (30) configured to calculate a parallax using a first corrected image and a second corrected image that are corrected by the geometric correction unit (25, 26); **characterized by**
   an exposure time difference adjusting unit (60) configured to adjust a geometric correction position of at least one image based on a difference between a geometric correction amount used for distortion correction of a first image serving as a reference and a geometric correction amount used for distortion correction of a second image and based on vehicle information regarding a position or movement of the vehicle.

2. The image processing device according to claim 1, comprising

   a geometric correction table as a geometric correction amount used for distortion correction of an image captured for each image sensor, wherein
   the exposure time difference adjusting unit (60) obtains a difference in exposure timing for each pixel between the images from a difference in correction amounts of a first geometric correction table (28) of the first image serving as a reference and a second geometric correction table (27) of the second image, and adjusts a geometric correction position of at least one image based on the difference in the exposure timing for the each pixel and based on the vehicle information.

3. The image processing device according to claim 1, comprising

   an exposure difference table indicating a difference in an exposure timing for each pixel between the images captured by the respective image sensors (210, 220), wherein
   the exposure time difference adjusting unit (60) extracts a value of the exposure difference table corresponding to an image to be adjusted, and adjusts a geometric correction position of at least one image based on the extracted value and the vehicle information.

4. The image processing device according to claim 2, wherein a difference in the exposure timing for the each pixel is indicated by a table indicating a time ratio in units of rasters.

5. The image processing device according to claim 1, wherein the vehicle information includes an own vehicle speed and a turning angle.

6. The image processing device according to claim 1, comprising

   a dynamic geometric correction unit (25, 26) configured to detect an amount of optical axis deviation of an image in operation, wherein
   the exposure time difference adjusting unit (60) adjusts a geometric correction position of at least one image using a deviation of the exposure timing of the image and the amount of optical axis deviation detected by the dynamic geometric correction unit (25, 26).

7. A stereo camera device comprising:

   the image processing device (20) according to claim 1; and
   the plurality of image sensors (210, 220) configured to input images to the image processing device (20).

**Patentansprüche**

1. Bildverarbeitungsvorrichtung, umfassend:

   eine geometrische Korrektureinheit (25, 26), die ausgelegt ist, um eine Verzerrung eines ersten Bilds und eines zweiten Bilds, die von einem ersten Bildsensor (220) vom Rollblendenverschlusstyp bzw. einem zweiten Bildsensor (210) vom Rollblendenverschlusstyp aufgenommen werden, die in einem Fahrzeug montiert sind, zu korrigieren; und
   eine Parallaxen-Berechnungseinheit (30), die ausgelegt ist, um eine Parallaxe unter Verwendung eines ersten korrigierten Bilds und eines zweiten korrigierten Bilds zu berechnen, die durch die geometrische Korrektureinheit (25, 26) korrigiert werden; **dadurch gekennzeichnet, dass**:
   eine Belichtungszeit-Differenzeinstelleinheit (60), die ausgelegt ist, um eine geometrische Korrekturposition von zumindest einem Bild basierend auf einer Differenz zwischen einem geometrischen Korrekturausmaß, das für die Verzerrungskorrektur eines ersten Bilds verwendet wird, das als Referenz dient, und einem geometrischen Korrekturausmaß, das zur Verzerrungskorrektur eines zweiten Bilds verwendet wird, und basierend auf Fahrzeuginformationen in Bezug auf eine Position oder Bewegung des Fahrzeugs einzustellen.

2. Bildverarbeitungsvorrichtung nach Anspruch 1, umfassend eine Tabelle der geometrischen Korrektur als geometrische Korrekturausmaß, das zur Verzerrungskorrektur eines Bilds verwendet wird, das für jeden Bildsensor aufgenommen wird, wobei die Belichtungszeit-Differenzeinstelleinheit (60) eine Differenz der Belichtungszeit für jedes Pixel zwischen den Bildern aus einer Differenz der Korrekturausmaße einer ersten Tabelle (28) der geometrischen Korrektur des ersten Bilds, das als Referenz dient, und einer zweiten Tabelle (27) der geometrischen Korrektur des zweiten Bilds erhält, und eine geometrische Korrekturposition von zumindest einem Bild basierend auf der Differenz der Belichtungszeit für das jeweiligen Pixel und basierend auf den Fahrzeuginformationen einstellt.

3. Bildverarbeitungsvorrichtung nach Anspruch 1, umfassend:

   eine Belichtungsdifferenztabelle, die eine Differenz einer Belichtungszeit für jedes Pixel zwischen den Bildern angibt, die von den entsprechenden Bildsensoren (210, 220) aufgenommen wurden, wobei
die Belichtungszeit-Differenzeinstelleinheit (60) einen Wert der Belichtungsdifferenztabelle, der einem einzustellenden Bild entspricht, extrahiert und eine geometrische Korrekturposition von zumindest einem Bild basierend auf dem extrahierten Wert und den Fahrzeuginformationen einstellt.

4. Bildverarbeitungsvorrichtung nach Anspruch 2, wobei eine Differenz der Belichtungszeit für das jeweilige Pixel durch eine Tabelle angegeben wird, die ein Zeitverhältnis in Rastereinheiten angibt.

5. Bildverarbeitungsvorrichtung nach Anspruch 1, wobei die Fahrzeuginformationen eine eigene Fahrzeuggeschwindigkeit und einen Kurvenwinkel umfassen.

6. Bildverarbeitungsvorrichtung nach Anspruch 1, umfassend:

   eine dynamische geometrische Korrektureinheit (25, 26), die ausgelegt ist, um ein Ausmaß einer Abweichung von einer optischen Achse eines Bilds im Betrieb zu detektieren, wobei
   die Belichtungszeit-Differenzeinstelleinheit (60) eine geometrische Korrekturposition von zumindest einem Bild unter Verwendung einer Abweichung der Belichtungszeit des Bilds und des Ausmaßes der Abweichung von der optischen Achse, die durch die dynamische geometrische Korrektureinheit (25, 26) detektiert wird, einstellt.

7. Stereokameravorrichtung, umfassend:

   eine Bildverarbeitungsvorrichtung (20) nach Anspruch 1; und
   die Vielzahl von Bildsensoren (210, 220), die ausgelegt ist, um Bilder in die Bildverarbeitungsvorrichtung (20) einzugeben.

**Revendications**

1. Dispositif de traitement d'image, comprenant :

   une unité de correction géométrique (25, 26) configurée pour corriger une distorsion d'une première image et d'une seconde image capturées par un premier capteur d'image de type à obturateur roulant (220) et un second capteur d'image de type à obturateur roulant (210), respectivement, montés dans un véhicule ; et
   une unité de calcul de parallaxe (30) configurée pour calculer une parallaxe en utilisant une première images corrigée et une seconde images corrigée qui sont corrigées par l'unité de correction géométrique (25, 26) ; **caractérisé par** une unité d'ajustement de différence de temps d'exposition (60) configurée pour ajuster une position de correction géométrique d'au moins une image sur la base d'une différence entre une quantité de correction géométrique utilisée pour une correction de distorsion d'une première image servant de référence et une quantité de correction géométrique utilisée pour une correction de distorsion d'une seconde image, et sur la base d'informations de véhicule concernant une position ou un déplacement du véhicule.

2. Dispositif de traitement d'image selon la revendication 1, comprenant

une table de correction géométrique en tant que quantité de correction géométrique utilisée pour la correction de distorsion d'une image capturée pour chaque capteur d'image, dans lequel l'unité d'ajustement de différence de temps d'exposition (60) obtient une différence de synchronisation d'exposition pour chaque pixel entre les images à partir d'une différence de quantités de correction d'une première table de correction géométrique (28) de la première image servant de référence et d'une seconde table de correction géométrique (27) de la seconde image, et ajuste une position de correction géométrique d'au moins une image sur la base de la différence non sélectionnée dans la synchronisation d'exposition pour chaque pixel, et sur la base des informations de véhicule.

3. Dispositif de traitement d'image selon la revendication 1, comprenant

une table de différence d'exposition indiquant une différence dans une synchronisation d'exposition pour chaque pixel entre les images capturées par les capteurs d'image respectifs (210, 220), dans lequel l'unité d'ajustement de différence de temps d'exposition (60) extrait une valeur de la table de différence d'exposition correspondant à une images à ajuster, et ajuste une position de correction géométrique d'au moins une image sur la base de la valeur extraite et des informations de véhicule.

4. Dispositif de traitement d'image selon la revendication 2, dans lequel une différence dans la synchronisation d'exposition pour chaque pixel est indiquée par une table indiquant un rapport de temps en unités de trames.

5. Dispositif de traitement d'image selon la revendication 1, dans lequel les informations de véhicule incluent une vitesse de véhicule propre et un angle de changement de direction.

6. Dispositif de traitement d'image selon la revendication 1, comprenant

une unité de correction géométrique dynamique (25, 26) configurée pour détecter une quantité de déviation d'axe optique d'une image en fonctionnement, dans lequel l'unité d'ajustement de différence de temps d'exposition (60) ajuste une position de correction géométrique d'au moins une images en utilisant une déviation de la synchronisation d'exposition de l'image et la quantité de déviation d'axe optique détectée par l'unité de correction géométrique dynamique (25, 26).

7. Dispositif de caméra stéréo, comprenant :

le dispositif de traitement d'images (20) selon la revendication 1 ; et la pluralité de capteurs d'image (210, 220) étant configurée pour entrer des images dans le dispositif de traitement d'image (20).

FIG. 1

# FIG. 2

| LEFT CAMERA | LEFT CAMERA IMAGE 2100 ... 2103 | GEOMETRICALLY TRANSFORMED LEFT IMAGE 2101 ... 2102 |
| RIGHT CAMERA | RIGHT CAMERA IMAGE 2200 ... 2203 | GEOMETRICALLY TRANSFORMED RIGHT IMAGE 2201 ... 2202 |

EP 4 030 746 B1

# FIG. 3

GEOMETRICALLY TRANSFORMED LEFT IMAGE    2101

VANISHING POINT PL

2104

GEOMETRICALLY TRANSFORMED RIGHT IMAGE    2201

VANISHING POINT PR

2204

# FIG. 4

LEFT
CAMERA

LEFT CAMERA IMAGE 2100

GEOMETRICALLY
TRANSFORMED LEFT IMAGE 2101

GEOMETRIC CORRECTION TABLE LEFT

|  | 0 | 1 | $\cdots$ m |
|---|---|---|---|
| 0 | (1,4) | (2,1) |  |
| 1 | (0,6) | (2,4) |  |
| $\vdots$ n |  |  |  |

~27

RIGHT
CAMERA

RIGHT CAMERA IMAGE 2200

GEOMETRICALLY
TRANSFORMED RIGHT IMAGE 2201

GEOMETRIC CORRECTION TABLE RIGHT

|  | 0 | 1 | $\cdots$ m |
|---|---|---|---|
| 0 | (1,3) | (1,1) |  |
| 1 | (1,7) | (2,6) |  |
| $\vdots$ n |  |  |  |

~28

15

## FIG. 5

## FIG. 6

# FIG. 7

START

CAPTURE IMAGE BY RIGHT CAMERA AND LEFT CAMERA — S100

UPDATE TABLE REFERENCE COORDINATE (x, y) — S110

CALCULATE REFERENCE COORDINATE (x', y') OF LEFT IMAGE DUE TO EXPOSURE TIME DIFFERENCE BETWEEN LEFT AND RIGHT IMAGES BY EXPOSURE TIME DIFFERENCE ADJUSTING UNIT — S120

CORRECT GEOMETRY OF CAPTURED IMAGE — S130

S140
DOES PROCESSING OF ENTIRE IMAGE END?
NO
YES

GENERATE PARALLAX BY PARALLAX CALCULATION UNIT — S150

CREATE ROAD SURFACE PARAMETER BY ROAD SURFACE ESTIMATION UNIT — S160

DETECT OBSTACLE ON ROAD BY OBJECT DETECTION UNIT — S170

GENERATE CONTROL INSTRUCTION FOR CONTROLLING VEHICLE ACCORDING TO POSITION OF OBSTACLE ON ROAD BY VEHICLE CONTROL UNIT — S180

S190
DOES SYSTEM END?
NO
YES

END

# FIG. 8

```
                        ┌─────────────┐
                        │    START    │
                        └──────┬──────┘
                               │
       ┌───────────────────────▼────────────────────────┐
       │   OBTAIN DIFFERENCE BETWEEN LEFT AND            │
       │   RIGHT GEOMETRIC CORRECTION TABLES (x, y)      │────── S200
       └───────────────────────┬────────────────────────┘
                               │
       ┌───────────────────────▼────────────────────────┐
       │   OBTAIN EXPOSURE TIME DIFFERENCE BETWEEN       │
       │   LEFT AND RIGHT CAMERAS OF PIXELS OF (x, y)    │────── S210
       └───────────────────────┬────────────────────────┘
                               │
       ┌───────────────────────▼────────────────────────┐
       │   OBTAIN DISTANCE (w) AND DIRECTION (u, v)      │
       │   OF MOVING VEHICLE BETWEEN DIFFERENCE          │────── S220
       └───────────────────────┬────────────────────────┘
                               │
       ┌───────────────────────▼────────────────────────┐
       │   CONVERT CORRECTION PORTION (x, y) OF LEFT     │
       │   IMAGE INTO THREE-DIMENSIONAL SPACE (X, Y, Z)  │────── S230
       └───────────────────────┬────────────────────────┘
                               │
   ┌───────────────────────────▼──────────────────────────────┐
   │ ADD MOVING AMOUNT (u, v, w) OF VEHICLE TO THREE-DIMENSIONAL│
   │ SPACE (X, Y, Z), AND OBTAIN POSITION (x', y') ON IMAGE     │──── S240
   └───────────────────────────┬──────────────────────────────┘
                               │
                        ┌──────▼──────┐
                        │     END     │
                        └─────────────┘
```

## FIG. 9

## FIG. 10

STEREO CAMERA DEVICE 10

IMAGE PROCESSING DEVICE 20

24 220

22 RIGHT CAMERA

23 210

21 LEFT CAMERA

26 GEOMETRIC CORRECTION (RIGHT) UNIT

25 GEOMETRIC CORRECTION (LEFT) UNIT

DYNAMIC GEOMETRIC CORRECTION UNIT 90

30 PARALLAX CALCULATION UNIT

40 OBJECT DETECTION UNIT

50 VEHICLE CONTROL UNIT

70 ROAD SURFACE ESTIMATION UNIT

CONTROL INSTRUCTION

60 EXPOSURE TIME DIFFERENCE ADJUSTING UNIT

EXPOSURE DIFFERENCE TABLE

TIME DIFFERENCE CALCULATION UNIT

COORDINATE ADJUSTMENT UNIT

605    601    602

VEHICLE INFORMATION

28 GEOMETRIC CORRECTION TABLE RIGHT

27 GEOMETRIC CORRECTION TABLE LEFT

80 TABLE REFERENCE COORDINATE GENERATION UNIT

EP 4 030 746 B1

# FIG. 11

606

VANISHING POINT (y=α)

604

603

# FIG. 12

START

SPECIFY (x, y) ON IMAGE — S300

SEARCH FOR LOCATION (x", y") OF (x, y) FROM IMAGE OF PREVIOUS FRAME — S310

CONVERT PARALLAX DATA OF (x", y") OF IMAGE OF PREVIOUS FRAME INTO DISTANCE Z" — S320

OBTAIN Z BY ADDING DISTANCE MOVING IN ONE FRAME PERIOD TO Z" — S330

CALCULATE (X, Y) FROM (x, y) AND Z — S340

END

## EP 4 030 746 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018105682 A
- JP 2019062255 A
- US 2012236124 A1